# EUROPÄISCHE PATENTANMELDUNG

(11) **EP 2 829 346 A1**
(43) Veröffentlichungstag der Anmeldung: **28.01.2015**
(21) Anmeldenummer: 13177948.0
(22) Anmeldetag: 25.07.2013
(51) Int. Cl.: B23H 5/10, B23H 5/04, B23H 9/10, B23H 9/14

(54) **Elektrode mit einem Kopf, sowie Verfahren zum Herstellen eines Kopfes, und ein erstes Verfahren zum Herstellen einer solchen Elektrode**

(71) Anmelder: Siemens Aktiengesellschaft, 80333 München (DE)
(72) Erfinder: Kamenzky, Susanne, 10713 Berlin (DE); Münzer, Jan, 10439 Berlin (DE)

(57) **Zusammenfassung**

Die Erfindung betrifft eine Elektrode (1,10,100) zur Bearbeitung eines Werkstücks, umfassend einen Hohlzylinder mit einem Hohlzylinderinnendurchmesser (3) und einen auf dem Hohlzylinder (2) angebrachten, zu dem Werkstück weisenden Kopf (20,200, 2000), wobei der Kopf (20,200,2000) zumindest einen zum Werkstück weisenden Spitzenbereich aufweist, wobei der Kopf (20,200,2000) auf dem Hohlzylinder (2) montierbar und demontierbar ist, und wobei der Kopf (20,200,2000) zumindest ein abrasives, spanendes Mittel und ein zu einem thermischen Abtrag, insbesondere zu einem funkenerosiven Abtrag, geeignetes Material (5) aufweist, so dass bei einer Bearbeitung des Werkstücks durch den Kopf (20,200,2000) ein abrasiver, spanender Abtrag, als auch ein thermischer, nichtmechanischer Abtrag des Werkstücks gleichzeitig möglich ist und wobei der Hohlzylinder (2) zumindest ein zu einem thermischen Abtrag, insbesondere zu einem funkenerosiven Abtrag, geeignetes Material (5) aufweist.

Weiterhin betrifft die Erfindung Verfahren zum Herstellen eines solchen Kopfes.

## Beschreibung

Die Erfindung betrifft eine Elektrode zur Bearbeitung eines Werkstücks, umfassend einen Hohlzylinder mit einem Hohlzylinderinnendurchmesser und einen auf dem Hohlzylinder angebrachten, zu dem Werkstück weisenden Kopf, wobei der Kopf zumindest einen zum Werkstück weisenden Spitzenbereich aufweist. Weiterhin betrifft die Erfindung ein erstes Verfahren zum Herstellen eines solchen Kopfes, sowie ein zweites Verfahren für die Herstellung eines solchen Kopfes und ein erstes Verfahren zum Herstellen einer solchen Elektrode.

Turbinen sind vielfach mit Werkstücken ausgestattet, welche zum Teil sehr komplexe Formen aufweisen, beispielsweise Turbinenschaufeln. Zur Herstellung derartiger Werkstücke kommt immer häufiger das Erodieren (Electrical Discharge Machining = EDM) zum Einsatz, ein thermisches, abtragendes Fertigungsverfahren für leitfähige Werkstücke, bei dem durch elektrische Entladungsvorgänge zwischen einer Elektrode und dem Werkstück ein Materialabtrag erfolgt. Mit dem Erodieren lassen sich insbesondere komplexe Ausnehmungen ausformen, beispielsweise besonders geformte Nuten, Taschen mit komplexen Querschnittsformen oder ähnliches. Sollen Bohrungen jedoch in keramikbeschichtete Werkstücke unter Zuhilfenahme der Erodiertechnik eingebracht werden, müssen die Bohrungen vor der Beschichtung eingebracht werden und nach dem Bohren mit einem Polymer o.ä. verschlossen bzw. maskiert werden, damit sie beim nachfolgenden Beschichten mit der keramischen Wärmedämmschicht nicht verschlossen werden. Nach Beschichtung mit der Keramik müssen die Rückstände der Maskierung wieder entfernt werden.

Derzeit sind keine industriell verfügbaren Anlagen oder erprobte Technologien bekannt, um mittels Erodiertechnik bzw. direkt auf Erodiermaschinen auch keramikbeschichtete Werkstücke bohren zu können, ohne die Keramikschicht vorher dementsprechend chemisch zu verändern, damit sie elektrisch leitfähig wird. Es können daher derzeit nur metallische bzw. metalisch beschichtete Werkstücke mittels EDM gebohrt werden, da die keramische Wärmedämmschicht nicht elektrisch leitfähig ist.

Es ist daher eine erste Aufgabe der Erfindung, eine Elektrode anzugeben, welche das oben genannte Problem behebt. Eine zweite Aufgabe ist die Angabe eines ersten Verfahrens zur Herstellung eines Kopfes für eine solche Elektrode. Eine dritte Aufgabe ist die Angabe eines zweiten Verfahrens zur Herstellung eines Kopfes für eine solche Elektrode. Eine vierte Aufgabe ist die Angabe eines Verfahrens zum Herstellen einer solchen Elektrode.

Erfindungsgemäß wird die erste Aufgabe mit der Angabe einer Elektrode zur Bearbeitung eines Werkstücks, umfassend einen Hohlzylinder mit einem Hohlzylinderinnendurchmesser und einen auf dem Hohlzylinder angebrachten, zu dem Werkstück weisenden Kopf, wobei der Kopf zumindest einen zum Werkstück weisenden Spitzenbereich aufweist, gelöst. Der Kopf ist dabei auf dem Hohlzylinder montierbar und demontierbar. Der Kopf weist zudem zumindest ein abrasives, spanendes Mittel und ein zu einem thermischen Abtrag, insbesondere zu einem funkenerosiven Abtrag, geeignetes Material auf, so dass bei einer Bearbeitung des Werkstücks durch den Kopf ein abrasiver, spanender Abtrag als auch ein thermischer, nichtmechanischer Abtrag des Werkstücks gleichzeitig möglich ist und wobei der Hohlzylinder zumindest ein zu einem thermischen Abtrag, insbesondere zu einem funkenerosiven Abtrag, geeignetes Material aufweist.

Mit der erfindungsgemäßen Elektrode ist eine durchgängige Bearbeitung eines keramisch beschichteten Werkstücks ohne vorausgegangene Maskierung des Werkstücks möglich. Erfindungsgemäß wird ein geeignetes Mittel zur spanenden Bearbeitung einer elektrisch nichtleitfähigen Schicht, insbesondere einer nichtleitenden keramischen Oberflächenschicht in der Elektrode gebunden; d.h. der Kopf der Elektrode umfasst ein Mittel zum Abtragen der nichterodierbaren Schicht des Werkstücks. Das Mittel ermöglicht zu Beginn der Bearbeitung den spanenden Abtrag eines nichtleitenden Werkstücks, durch eine Abrasivwirkung des gebundenen Schneidstoffs an der rotierenden Elektrode. Diese wird dabei in Richtung der Bohrungsachse, welche der Rotationsachse der Elektrode entspricht, bewegt. Ohne Beschränkung der Allgemeinheit wird nachfolgend für ein nichtleitendes beschichtetes Werkstück ein keramisch beschichtetes Werkstück herangezogen. Findet die Bearbeitung in einem Dielektrikum statt, so werden die so spanend abgetragenen Keramikpartikel vom durch und um die Elektrode zugeführten Dielektrikum fortgespült, sowie Elektrode und Werkstück von diesem gekühlt. Da der Kopf der Elektrode ein Mittel als auch ein Material zu einem thermischen Abtragen, insbesondere zu einem funkenerosiven Abtrag, vorhanden ist, kann der Erodierprozess im eigentlichen Sinne als thermischer Abtrag starten, sobald die Keramikschicht lokal entfernt, das heißt durchgebohrt ist. D.h. dass nachdem die keramische Wärmedämmschicht spanend bearbeitet wurde, der Kopf aufgrund seiner elektrischen Leitfähigkeit zur Erodierbearbeitung weiterverwendet wird bis er dabei verschleißt bzw. "abbrennt". Dann kann die Erodierarbeit mit dem Hohlzylinder fortgeführt werden, bis die Bohrung komplett ist. Alternativ kann der Kopf jedoch auch mittels einem mechanischen Greifer automatisch wieder herausgezogen oder mittels integrierter Drahterodiereinheit abgeschnitten werden. Durch die De-/Montierbarkeit des Kopfes, kann dieser ersetzt werden, wenn ein weiteres oder zusätzliches Abtragen der nichterodierbaren Schicht erforderlich ist, und der Kopf bereits verschlissen ist. Auch bei vollständig aufgebrauchtem Kopf, kann ein neuer auf den vorhandenen Hohlzylinder montiert werden, falls der spanende Abtrag noch fortgesetzt werden muss. Dadurch wird die Bearbeitungszeit aufgrund der vereinfachten technischen Abläufe und der vereinfachten Logistik verkürzt.

Mit der erfindungsgemäßen Elektrode kann nun ein spanendes und ein abtragendes, nichtmechanisches Fertigungsverfahren mit einem einzigen Werkzeug kombiniert werden. Mit der erfindungsgemäßen Elektrode können auf einer Erodiermaschine durch die Kombination aus einem spanenden und einem abtragenden Fertigungsverfahren, in einem Zweischrittverfahren beispielsweise Kühlluftbohrungen in ein heißgasführendes Werkstück mit einer elektrisch nichtleitenden keramischen Wärmedämmschicht gebohrt werden. Die Bearbeitungszeit wird aufgrund der vereinfachten technischen Abläufe und der verschlankten Logistik verkürzt. Durch die erfindungsgemäße Elektrode wird zudem Material, Zeit und Arbeit gespart.

Bevorzugt umfasst das Mittel zumindest einen abrasiven, spanenden Schneidstoff. Der Schneidstoff umfasst in bevorzugter Ausgestaltung Korund und/oder Industriediamant und/oder kubisch kristallines Bornitrid (CBN). Diese eignen sich besonders gut für keramische Wärmedammschichten.

Bevorzugt ist der Kopf pulvermetallurgisch aufgebaut und verfestigt. Dadurch ist eine kostengünstige und einfache Herstellung des Kopfes gewährleistet.

Bevorzugt umfasst das Mittel zudem teilweise Schneiden, wobei die Schneiden zumindest teilweise einen Hartstoff umfassen. In bevorzugter Ausgestaltung umfasst der Hartstoff einen Werkzeugstahl und/oder eine Schneidkeramik, und/oder Korund und/oder Diamant. Diese eignen sich besonders gut zum Bearbeiten einer Keramikschicht.

Bevorzugt wird als Hartstoff der Schneidstoff verwendet. Dies vereinfacht die Herstellung der Elektrode z.B. durch Sintern.

Dabei sind die Schneiden bevorzugt geometrisch bestimmte Schneiden. Dies liegt beispielsweise vor, wenn die Schneidenanzahl und/oder die Lage zum Werkstück bekannt sind. Alternativ oder zusätzlich sind die Schneiden geometrisch unbestimmte Schneiden. Dies liegt beispielsweise vor, wenn die Schneidenanzahl, und die Lage zum Werkstück nur über statistische Kenngrößen beschreibbar sind.

In einem weiteren bevorzugten Ausführungsbeispiel ist der zum werkstückweisenden Spitzenbereich des Kopfes näherungsweise als Kegel mit einer zum Werkstück weisenden Kegelspitze und einer Kegelgrundfläche mit einem Kegelgrunddurchmesser ausgestaltet, und wobei die Kegelgrundfläche ein werkstückabgewandt angeschlossener Endbereich, welcher als Endzylinder mit einem Endzylinderaußendurchmesser ausgestaltet ist, nachfolgt. Dabei ist der Endzylinderaußendurchmesser kleiner als der Kegelgrunddurchmesser und bildet quasi eine Art "Stiel".

In einer bevorzugten Ausgestaltung ist die Kegelgrundfläche als ein sich in die Höhe erstreckender Kegelgrundboden mit einem Kegelgrunddurchmesser ausgebildet. Dies verlängert den Kopf.

Bevorzugt weisen der Kegel und der Kegelgrundboden sowohl Schneiden als auch Schneidstoff zum spanenden Abtrag als auch Material zum thermischen, nichtmechanischen Abtrag auf. Somit ist eine besonders schnelle und effiziente Bearbeitung der nichterodierbaren abzutragenden Schicht möglich.

Bevorzugt ist der Endzylinderaußendurchmesser größer als der Hohlzylinderinnendurchmesser, so dass der Endzylinder zumindest teilweise in den Hohlzylinder mittels Presspassung einbringbar ist. Dabei ist der Endzylinderaußendurchmesser lediglich geringfügig größer als der Hohlzylinderinnendurchmesser. D.h. weist dabei der Hohlzylinderinnendurchmesser einen Durchmesser von D_i auf, so weist der Endzylinderaußendurchmesser einen Durchmesser von D_i + 0,x mm auf, wobei x eine beliebige Zahl ist. Dies entspricht einer sogenannten Übermaßpassung.

In einem weiteren bevorzugten Ausführungsbeispiel ist der Hohlzylinderinnendurchmesser größer als der Endzylinderaußendurchmesser, so dass der Endzylinder zumindest teilweise in den Hohlzylinder mittels Spielpassung einbringbar ist. Dabei könnte ein an dem Umfang des Endzylinders angebrachtes Bindemittel für eine sichere Haftung des Kopfes an dem Hohlzylinder sorgen. Dies wäre fertigungstechnisch sehr einfach herzustellen.

Bevorzugt weist der Hohlzylinder einen Hohlzylinderaußendurchmesser auf und der Hohlzylinderaußendurchmesser entspricht ungefähr dem Kegelgrunddurchmesser. Somit ist eine durchgängige gleichmäßige Bohrung, d.h. mit gleichem Durchmesser des Werkstücks möglich.

Erfindungsgemäß wird die zweite Aufgabe mit der Angabe eines Verfahrens zum Herstellen eines Kopfes für eine wie oben beschriebene Elektrode, mit zumindest einem zum Werkstück weisenden Spitzenbereich, gekennzeichnet durch folgende Schritte, gelöst:
- Bereitstellen einer zumindest teilweisen hohlen Materialmatrix, insbesondere einer metallischen Matrix, wobei das Material eine hohe elektrische Leitfähigkeit und einen hohen Schmelzpunkt aufweist;
- Füllen der Hohlräume mit zumindest teilweise pulvrigem Schneidstoff zu einer Vollmatrix;
- Verfestigen des Schneidstoffs mit der Matrix durch Wärmebehandlung zu dem Kopf, so dass ein abrasiver, spanender Abtrag als auch ein thermischer, nichtmechanischer Abtrag des Werkstücks gleichzeitig ermöglicht wird.

Der Schneidstoff wird in die geeignete metallische Matrix eingebettet, die Elektrode dann geformt und anschließend wärmebehandelt. Dabei ist das Metall eine Kupferlegierung bzw. allgemein eine Metalllegierung mit sehr guter elektrischer Leitfähigkeit und hohem Schmelzpunkt. Ist die Keramikschicht lokal entfernt, so kann jederzeit der Abtrag als funkenerosiver Prozess starten. Selbstverständlich kann auch die gesamte Elektrode derart aufgebaut sein. Der Kopf wird somit pulvermetallurgisch aufgebaut bzw. gesintert.

Erfindungsgemäß wird die dritte Aufgabe mit der Angabe eines Verfahrens zum Herstellen eines Kopfes für eine wie oben beschriebene Elektrode, mit zumindest einem zum Werkstück weisenden Spitzenbereich, gekennzeichnet durch folgende Schritte, gelöst:
- Bereitstellen eines Materials aus einem ersten Pulver, wobei das erste Pulver eine hohe elektrische Leitfähigkeit und einen hohen Schmelzpunkt aufweist,
- Bereitstellen eines Schneidstoffs aus einem zweiten Pulver, wobei das zweite Pulver eine abrasive, spanende Wirkung aufweist,
- Vermischen des ersten Pulvers und des zweiten Pulvers zu einem Pulvergemisch,
- Verfestigen des Pulvergemisches, so dass ein abrasiver, spanender Abtrag als auch ein thermisch, nichtmechanischer Abtrag des Werkstücks gleichzeitig ermöglicht wird.

Dies ist ein besonders einfaches Verfahren zur Herstellung eines solchen Kopfes einer Elektrode. Das Verfestigen des Pulvergemisches kann in einer Form durchgeführt werden.

Bevorzugt umfassen die oben beschriebenen Verfahren zum Herstellen eines Kopfes für eine Elektrode, den folgenden Schritt:
Anbringen von geometrisch bestimmten Schneiden und/oder geometrisch unbestimmten Schneiden zumindest in dem Spitzenbereich des Kopfes, so dass ein effektiver, abrasiver,
spanender Abtrag als auch ein thermisch, nicht mechanischer Abtrag des Werkstücks gleichzeitig ermöglicht wird.

Dadurch ist ein besonders schneller Abtrag der zu zerspanenden Werkstückschicht möglich. Zur Herstellung dieser Elektrode kann direkt vor der Bohrbearbeitung mit bereits montiertem Kopf beispielsweise mittels einer in eine Fast-Hole- bzw. Startloch-Erodiermaschine (nicht gezeigt) integrierten Abrichteinheit (nicht gezeigt) nach dem Prinzip des Senk- oder Drahterodierens, aber auch mittels einer Abrichteinheit (nicht gezeigt) mit rotierenden Abrichtrollen (nicht gezeigt) eine Schneidengeometrie zumindest in den Spitzenbereich des Kopfes eingebracht werden.

Erfindungsgemäß wird die vierte Aufgabe mit der Angabe eines Verfahrens zum Herstellen einer wie oben beschriebenen Elektrode zur Bearbeitung eines Werkstücks, umfassend einen Hohlzylinder mit einem Hohlzylinderinnendurchmesser und einen auf dem Hohlzylinder angebrachten, zu dem Werkstück weisenden Kopf, wobei der Kopf zumindest einen zum Werkstück weisenden Spitzenbereich und zumindest einen als Endbereich ausgestalteten, dem Spitzenbereich werkstückabgewandt nachfolgenden Endzylinder mit einem Endzylinderaußendurchmesser aufweist, mit den folgenden Schritten gelöst:
- Ausrichten des Endzylinders an den Hohlzylinder,
- Einbringen des Endzylinders an den Hohlzylinder als eine Passung.

Bevorzugt ist der Endzylinderaußendurchmesser größer als der Hohlzylinderinnendurchmesser, und die Passung wird als Presspassung ausgeführt. Dadurch ergibt sich ein besonders sicherer Halt des Kopfes in dem Hohlzylinder ohne Bindemittel oder ähnlichem. Eine derartige Montage ist besonders einfach.

In bevorzugter Ausgestaltung wird nach dem spanenden Bearbeiten des Werkstücks der Kopf zum funkenerosiven Bearbeiten des Werkstücks verwendet, so lange bis der Kopf verschlissen ist und/oder mechanisch aus dem Hohlzylinder herausgezogen wird und/oder zumindest teilweise abgeschnitten wird. Anschließend wird bedarfsweise der Hohlzylinder zur funkenerosiven Bearbeitung des Werkstücks verwendet.

Bevorzugt wird der Kopf mit einem der oben beschrieben Verfahren hergestellt.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ des Erfindungsgegenstandes gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen. Darin zeigen schematisch:
- Figur 1:: eine erste erfindungsgemäße Elektrode mit Schneidstoff im demontierten Zustand,
- Figur 2:: eine zweite erfindungsgemäße Elektrode mit Schneidstoff und Schneiden im demontierten Zustand,
- Figur 3:: eine dritte erfindungsgemäße Elektrode mit Schneidstoff und Schneiden im demontierten Zustand.

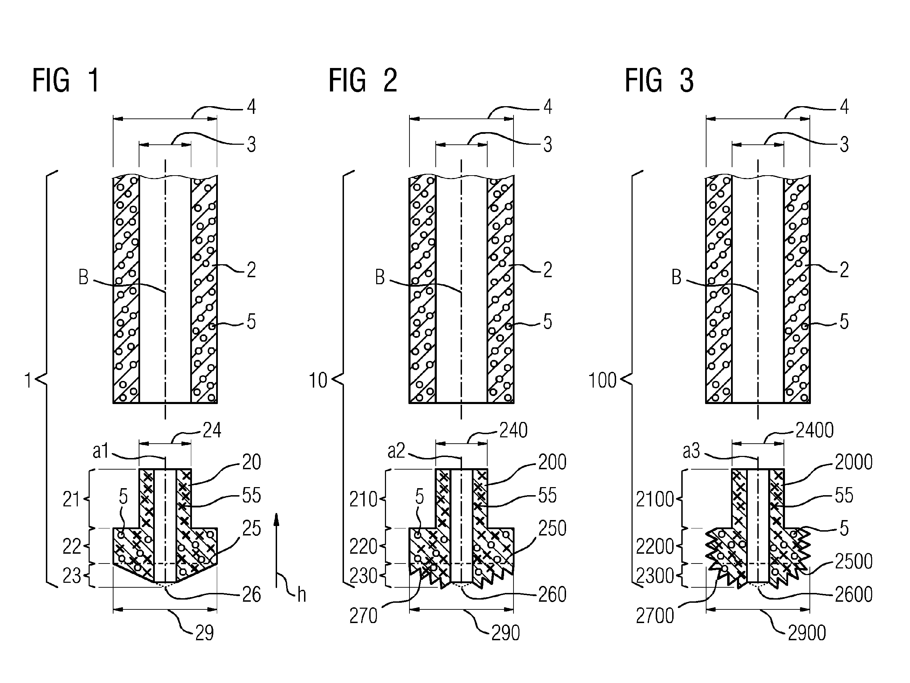

Figur 1 zeigt eine erste erfindungsgemäße Elektrode 1 im demontierten Zustand. Diese besteht aus einem Hohlzylinder 2, welcher um eine Achse B hohl ausgeführt ist, mit einem Hohlzylinderaußendurchmesser 4 und einem Hohlzylinderinnendurchmesser 3. Dabei ist dieser Hohlzylinder 2 insbesondere eine Stab- bzw. Rohrerodierelektrode. Der Hohlzylinder 2 weist dabei ein zum thermischen, funkenerosiven Abtrag geeinigtes Material 5 auf. Dabei ist das zum Abtrag geeignete Material 5 beispielsweise Kupfer und/oder eine Kupferlegierung oder ein anderes Material mit hohem Schmelzpunkt und hoher elektrischen Leitfähigkeit.

Zudem weist die erfindungsgemäße Elektrode 1 einen Kopf 20 auf. Dieser gliedert sich in mehrere Teile. Zuerst in einen Endbereich der als Endzylinder 21 ausgeführt ist. Der Endzylinder 21 weist dabei einen Endzylinderaußendurchmesser 24 auf. Zudem weist der Kopf 20 noch einen Spitzenbereich mit einem Spitzenpunkt 26 auf. Dabei weist der Spitzenbereich zu einem zu bearbeitenden Werkstück hin. Der Spitzenbereich ist hier als Kegel 23 mit einer Kegelbodenfläche 25 ausgebildet. Der hier vorgestellte Kopf 20 weist zudem noch einen dritten Teil auf. Dieser wird durch eine sich in der Höhe h erstreckende Kegelgrundfläche 23 gebildet und wird nachfolgend als Kegelgrundboden 22 bezeichnet. Selbstverständlich kann der Kegelgrundboden 22 auch dünner oder dicker sein oder ganz weggelassen werden. Dabei liegt der Mittelpunkt der Kegelgrundfläche 25 und der Spitzenpunkt 26 des Kegels 23, der Mittelpunkt des Kegelgrundbodens 22 und der Mittelpunkt des Endzylinders 26 auf einer durchgängigen gemeinsamen Achse a1. Dabei kann der Kopf 20 um die gemeinsame Achse a1, bezogen auf die Hohe h, durchgängig hohl ausgeführt sein. Dabei umfasst der Kopf 20 zumindest einen abrasiven, spanenden Schneidstoff 55. Dabei kann der Schneidstoff 55 Korund und/oder Industriediamant und/oder kubisch kristallines Bornitrid (CBN) umfassen. Auch weist der Kopf 20 ein zum thermischen Abtragen geeignetes Material 5 auf. Dieses kann eine Metalllegierung sein. Dabei ist das zum thermischen Abtragen geeignete Material 5 des Kopfes identisch mit dem zum Abtrag geeigneten Material 5 der Hohlelektrode 2. Auch kann jedoch das Material selbstverständlich unterschiedlich sein. Der Kopf 20 kann pulvermetallurgisch aufgebaut und verfestigt sein.

Der Kopf 20 wird in den Hohlzylinder 2 mittels einer Passung eingebracht, so dass die Achse a1 und die Achse B des Hohlzylinders deckungsgleich sind. Dabei ist der Endzylinderaußendurchmesser 24 geringfügig (+0,x mm, wobei x beliebig ist) größer als der Hohlzylinderinnendurchmesser 3, so dass die Passung als Presspassung ausgeführt wird. Selbstverständlich kann die Passung auch als Spielpassung ausgeführt werden und der Endzylinder 21 durch Bindemittel in den Hohlzylinder 2 befestigt werden. Auch andere Befestigungsmethoden sind möglich.

Der Kopf 20 einer ersten, erfindungsgemäßen Elektrode 1 weist nun einen geeigneten Schneidstoff 55 zur spanenden Bearbeitung einer elektrisch nichtleitfähigen Keramikschicht, insbesondere einer Wärmedämmschicht, eines zu bearbeitenden Werkstücks auf. Dabei kann die Wärmedämmschicht auch eine Haftvermittlerschicht aufweisen. Diese kann elektrisch nichtleitfähig oder aber auch elektrisch leitfähig sein. Ein insbesondere für Keramik geeigneter Schneidstoff 21 ist dabei z.B. Korund, Granat(Sand), Industriediamant, CBN o.ä.. Der gebundene Schneidstoff 55 ermöglicht zu Beginn der Bearbeitung einen spanenden Abtrag eines nichtleitenden Werkstücks, durch eine Abrasivwirkung des Schneidstoffs 55 an der rotierenden Elektrode 1. Diese wird dabei in Richtung der Bohrungsachse, welche der Rotationsachse der Elektrode 1 entspricht, bewegt. Findet die Bearbeitung in einem Dielektrikum statt, so werden die so spanend abgetragenen Keramikpartikel vom durch und um die Elektrode 1 bzw. den Kopf 20 zugeführten Dielektrikum fortgespült, sowie die Elektrode 1 und das Werkstück von diesem gekühlt. Da im Kopf 20 der Elektrode 1 ein Schneidstoff 55 als auch ein Material 5 zu einem thermischen Abtragen, insbesondere zu einem funkenerosiven Abtrag, vorhanden ist, kann der Erodierprozess im eigentlichen Sinne als thermischer Abtrag starten, sobald die Keramikschicht lokal entfernt, das heißt durchgebohrt ist.

Dies bedeutet, dass nach dem spanenden Bearbeiten der keramische Wärmedämmschicht, der Kopf 20 aufgrund seiner elektrischen Leitfähigkeit zur Erodierbearbeitung weiterverwendet wird bis er dabei verschleißt bzw. "abbrennt" oder mittels mechanischem Greifer automatisch wieder herausgezogen oder mittels integrierter Drahterodiereinheit abgeschnitten wird. Anschließend wird der Hohlzylinder 2 zur funkenerosiven Bearbeitung des Werkstücks weiterverwendet. Wird der Kopf nicht herausgezogen, so verbleibt ein Teil des Endzylinders 21 in dem Hohlzylinder 2 bis dieser mit dem Endzylinder 21 durch funkenerosiven Abtrag vollständig verbrannt worden ist.

Dadurch wird die Bearbeitungszeit aufgrund der vereinfachten technischen Abläufe und der vereinfachten Logistik verkürzt. Bevorzugt entspricht der Hohlzylinderaußendurchmesser 4 dem Kegelgrunddurchmesser 29, d.h. der breitesten Stelle des Kopfes 20. Somit wird eine durchgängig gleichmäßige Bohrung, d.h. mit gleichem Durchmesser, durch das Werkstück gewährleistet.

Zur Herstellung eines Kopfes 20, kann der Schneidstoff 55 in eine geeignete metallische Matrix, z.B. eine Kupferlegierung bzw. eine Metalllegierung mit sehr guter elektrischer Leitfähigkeit und hohem Schmelzpunkt, eingebettet werden; der Kopf 20 dann geformt und anschließend wärmebehandelt werden.

Auch kann ein solcher Kopf 20 durch Bereitstellen eines Materials 5 aus einem ersten Pulver, und eines Schneidstoffs 55 aus einem zweiten Pulver gefertigt werden, so dass zumindest ein abrasiver, spanender Abtrag, als auch ein thermischer, nichtmechanischer Abtrag eines Werkstücks gleichzeitig möglich ist. Dabei weist das erste Pulver eine hohe elektrische Leitfähigkeit und einen hohen Schmelzpunkt und das zweite Pulver eine abrasive, spanende Wirkung auf. In diesem Fall werden das erste Pulver und das zweite Pulver zu einem Pulvergemisch gemischt und zu dem Kopf 20 verfestigt. Der Schneidstoff 55 ermöglicht auch hier zu Beginn der Bohrbearbeitung der Keramikschicht des zu bearbeitenden Werkstücks, den spanenden Abtrag durch die Abrasivwirkung des Schneidstoffs 55 an dem rotierenden Kopf 20. Ist die Keramikschicht lokal entfernt bzw. durchgebohrt, startet der Erodierprozess im eigentlichen Sinne als funkenerosiver Abtrag.

Der Schneidstoff 55 und das zum thermischen Abtragen geeignete Material 5 sind, in jeder Höhenschicht gleichmäßig in dem Kopf 20 verteilt. Somit kann sehr einfach sichergestellt werden, dass gleichzeitig ein spanender und ein thermischer Abtrag möglich ist.

Figur 2 zeigt eine zweite erfindungsgemäße Elektrode 10. Diese umfasst einen wie oben beschriebenen Hohlzylinder 2. Auch hier weist die erfindungsgemäße Elektrode 1 einen Kopf 200 auf. Dieser gliedert sich in mehrere Teile. Zuerst in einen Endbereich der als Endzylinder 210 ausgeführt ist. Der Endzylinder 210 weist dabei einen Endzylinderaußendurchmesser 240 auf. Zudem weist der Kopf 200 noch einen Spitzenbereich mit einem Spitzenpunkt 260 auf. Dabei weist der Spitzenbereich zu einem Werkstück hin. Der Spitzenbereich ist hier als Kegel 230 mit einer Kegelbodenfläche 250 ausgebildet. Der Endzylinderaußendurchmesser 240 ist wesentlich kleiner ausgeführt als der Durchmesser des Kegelbodens 250 und bildet quasi eine Art Stiel. Der hier vorgestellte Kopf 200 weist zudem auch hier noch einen dritten Teil auf. Dieser wird durch eine sich in der Höhe h erstreckende Kegelgrundfläche 230 gebildet und wird nachfolgend als Kegelgrundboden 220 bezeichnet.

Selbstverständlich kann der Kegelgrundboden 220 auch dünner oder dicker sein oder ganz weggelassen werden. Dabei liegt der Mittelpunkt der Kegelgrundfläche 250 und der Spitzenpunkt 260 des Kegels 230, der Mittelpunkt des Kegelgrundbodens 220 und der Mittelpunkt 260 des Endzylinders 210 auf einer durchgängigen gemeinsamen Achse a2. Dabei kann der Kopf 200 um die gemeinsame Achse a2, bezogen auf die Hohe h, durchgängig hohl ausgeführt sein. Dabei umfasst der Kopf 200 einen abrasiven, spanenden Schneidstoff 55. Dabei kann der Schneidstoff 55 Korund und/oder Industriediamant und/oder kubisch kristallines Bornitrid (CBN) umfassen. Zudem umfasst der Kegel 230 zumindest teilweise an seiner Kegelmantelfläche noch Schneiden 270. Diese können als geometrisch bestimmte Schneiden oder unbestimmte Schneiden ausgebildet sein. Dabei können die Schneiden aus Hartwerkstoff wie beispielsweise Diamant, Bornitrid, Werkzeugstähle, Sinterwerkstoffe, Schneidkeramik, Korund oder Diamant verwendet werden. sein. Dabei ist der Hartwerkstoff zum Schneiden, insbesondere eines mit einer Keramikschicht beschichteten Werkstücks geeignet, da es den notwendigen Härtegrad aufweist. Der Hartwerkstoff in der Elektrode 10 kann jedoch auch zum Erodieren verwendet werden. Dies bedeutet, dass mit einer solchen Elektrode 10, welche im Wesentlichen aus nur einem Metall besteht, gleichzeitig erodiert und geschnitten werden kann. Dabei kann anstatt Hartwerkstoff 10 jeder Werkstoff oder jede Werkstoffkombination verwendet werden, insbesondere der Schneidstoff 55, der sich durch eine hohe Härte, metallische Eigenschaften und gute elektrische und thermische Leitfähigkeit auszeichnet. Wird - wie in Figur 2 - als Hartwerkstoff der Schneidstoff 55 herangezogen, so ist eine besonders einfach Fertigung möglich.

Der Kegel 230 ist nun an der Kegelmantelfläche zumindest teilweise mit Schneiden 270 versehen. Dies können geometrisch bestimmte Schneiden 10 oder geometrisch unbestimmte Schneiden sein. Dabei haben die geometrisch bestimmten Schneiden 10 eine geometrisch bestimmte Form. Dies bedeutet, dass beispielsweise die Schneidenanzahl, und die Lage der Schneiden 270 zum Werkstück bekannt und beschreibbar sind.

Zur Herstellung des Kopfes 200 kann dieser wie in Figur 1 hergestellt werden, in den Hohlzylinder 2 mittels Passung eingebracht werden und anschließend direkt vor der Bohrbearbeitung beispielsweise mittels einer in eine Fast-Hole- bzw. Startloch-Erodiermaschine (nicht gezeigt) integrierten Abrichteinheit (nicht gezeigt) nach dem Prinzip des Senk- oder Drahterodierens, aber auch mittels einer Abrichteinheit (nicht gezeigt) mit rotierenden Abrichtrollen (nicht gezeigt) eine Schneidengeometrie den Kegel 230 eingebracht werden. Der der Endzylinderaußendurchmesser 240 entspricht im Wesentlichen dem Endzylinderaußendurchmesser 24 der Elektrode 1 der Figur 1.

Die Schneidengeometrie kann eine geometrisch bestimmte Form haben, oder auch, z.B. durch Abrichten auf einer sehr rauen Platte (nicht gezeigt) mittels Senkerodieren mit geometrisch unbestimmten Schneiden versehen werden. Dabei können die geometrisch unbestimmten Schneiden einem stochastischen Zahnfeld, gewissermaßen einem sehr groben Sandpapier ähneln. Selbstverständlich kann der Kopf 200 auch vorher komplett gefertigt werden und anschließend in den Hohlzylinder 2 eingebracht werden. Auch hier können, wie im Beispiel der Figur 1, die Abtragsprodukte, d.h. der Schneidstoff 55 bzw. der Hartwerkstoff und das abgetragene Material des Werkstücks, von einem Dielektrikum fortgespült werden, falls die Bearbeitung in einem solchen stattfindet. Zudem wird auch hier dadurch die Elektrode 10 gekühlt. Da die Schneiden 270 des Kegels 230 während des Keramikbohrens stumpf werden, kann der Kegel 230 mittels der oben beschriebenen Abrichteinheit (nicht gezeigt) erneut mit einer Schneidengeometrie versehen werden.

Auch hier kann nach dem spanenden Bearbeiten der keramische Wärmedämmschicht, der Kopf 200 aufgrund seiner elektrischen Leitfähigkeit zur Erodierbearbeitung weiterverwendet werden, bis sie dabei verschleißt bzw. "abbrennt" oder mittels mechanischem Greifer automatisch wieder herausgezogen oder mittels integrierter Drahterodiereinheit abgeschnitten werden. Anschließend wird der Hohlzylinder 2 zur funkenerosiven Bearbeitung des Werkstücks weiterverwendet. Wird der Kopf 200 nicht herausgezogen, so verbleibt ein Teil des Endzylinders 210 in dem Hohlzylinder 2 bis dieser mit dem Endzylinder durch funkenerosiven Abtrag vollständig verbrannt worden ist.

Bei Figur 3 wird ebenfalls eine erfindungsgemäße Elektrode 100 aufgezeigt. Diese umfasst ebenfalls einen wie oben beschriebenen Hohlzylinder 2. Außerdem umfasst sie ebenfalls einen Kopf 2000, welche sich aus einem Endzylinder 2100, einem Grundkegelboden 2200 und einem Kegel 2300 zusammensetzt. In diesem Ausführungsbeispiel umfasst der Umfang des Grundkegelbodens 2200 ebenfalls Schneiden 2700. Dabei kann der Kopf 2000 wie in dem Ausführungsbeispiel der Figur 2 fertiggestellt werden.

Mit der erfindungsgemäßen Elektrode 1,10,100 ist eine Bearbeitung eines keramisch beschichteten Werkstücks ohne Maskierung des Werkstücks und Austausch einer Elektrode möglich. Dies spart Material, Zeit und Arbeit.

So kann beispielsweise der Kopf 20,200,2000 auch bei einer besonders harten zu durchbohrenden Schicht, mehrfach problemlos ausgetauscht werden.

Durch das gleichzeitige Vorhandensein des abrasiven, spanenden Schneidstoffs 55 sowie eines zu einem thermischen Abtrag, geeigneten Materials 5 in quasi jeder Schicht des Kopfes 20,200,2000 sowie der Schneiden 270,2700 ist ein abrasiver, spanender Abtrag als auch ein thermischer, nichtmechanischer Abtrag des Werkstücks gleichzeitig möglich.

## Patentansprüche

1. Elektrode (1,10,100) zur Bearbeitung eines Werkstücks, umfassend einen Hohlzylinder mit einem Hohlzylinderinnendurchmesser (3) und einen auf dem Hohlzylinder (2) angebrachten, zu dem Werkstück weisenden Kopf (20,200, 2000), wobei der Kopf (20,200,2000) zumindest einen zum Werkstück weisenden Spitzenbereich aufweist,
**dadurch gekennzeichnet, dass** der Kopf (20,200,2000) auf dem Hohlzylinder (2) montierbar und demontierbar ist, und wobei der Kopf (20,200,2000) zumindest ein abrasives, spanendes Mittel und ein zu einem thermischen Abtrag, insbesondere zu einem funkenerosiven Abtrag, geeignetes Material (5) aufweist, so dass bei einer Bearbeitung des Werkstücks durch den Kopf (20,200,2000) ein abrasiver, spanender Abtrag, als auch ein thermischer, nichtmechanischer Abtrag des Werkstücks gleichzeitig möglich ist und wobei der Hohlzylinder (2) zumindest ein zu einem thermischen Abtrag, insbesondere zu einem funkenerosiven Abtrag, geeignetes Material (5) aufweist.

2. Elektrode (1,10,100) nach Anspruch 1,
**dadurch gekennzeichnet, dass** das Mittel zumindest einen abrasiven, spanenden Schneidstoff (55) umfasst.

3. Elektrode (1,10,100) nach Anspruch 2,
**dadurch gekennzeichnet, dass** der Schneidstoff (55) Korund und/oder Industriediamant und/oder kubisch kristallines Bornitrid (CBN) umfasst.

4. Elektrode (1,10,100) nach einem der vorhergehenden Ansprüche 2-3,
**dadurch gekennzeichnet, dass** der Kopf (20,200,2000) pulvermetallurgisch aufgebaut und verfestigt ist.

5. Elektrode (1, 10,100) nach einem der Ansprüche 2-4,
**dadurch gekennzeichnet, dass** das Mittel zudem teilweise Schneiden (270,2700) umfasst, wobei die Schneiden (270,2700) zumindest teilweise einen Hartstoff umfassen.

6. Elektrode (1,10,100) nach Anspruch 5,
**dadurch gekennzeichnet, dass** der Hartstoff einen Werkzeugstahl und/oder eine Schneidkeramik, und/oder Korund und/oder Diamant umfasst.

7. Elektrode (1,10,100) nach einem der vorhergehenden Ansprüche 5-6,
**dadurch gekennzeichnet, dass** die Schneiden (270,2700) geometrisch bestimmte Schneiden sind.

8. Elektrode (1,10,100) nach einem der vorhergehenden Ansprüche 5-7,
**dadurch gekennzeichnet, dass** die Schneiden (270,2700) geometrisch unbestimmte Schneiden sind.

9. Elektrode (1,10,100) nach einem der vorhergehenden Ansprüche 5-8,
**dadurch gekennzeichnet, dass** als Hartstoff der Schneidstoff (55) verwendet wird.

10. Elektrode (1,10,100) nach einem der vorhergehenden Ansprüche 1-9,
**dadurch gekennzeichnet, dass** der zum Werkstück weisende Spitzenbereich des Kopfes (20,200,2000) näherungsweise als Kegel (23,230, 2300) mit einer zum Werkstück weisenden Kegelspitze (26,260,2600) und einer Kegelgrundfläche mit einem Kegelgrunddurchmesser (29,290,2900) ausgestaltet ist, und wobei der Kegelgrundfläche ein werkstückabgewandt angeschlossener Endbereich, welcher als Endzylinder (21,210,2100) mit einem Endzylinderaußendurchmesser (24,240,2400) ausgestaltet ist, nachfolgt und wobei der Endzylinderaußendurchmesser (24,240,2400) kleiner als der Kegelgrunddurchmesser (29,290,2900) ist.

11. Elektrode (1,10,100) nach Anspruch 10,
**dadurch gekennzeichnet, dass** die Kegelgrundfläche als ein sich in die Höhe (h) erstreckender Kegelgrundboden (22,220,2200) mit dem Kegelgrunddurchmesser (29,290,2900) ausgebildet ist.

12. Elektrode (1,10,100) nach Anspruch 11,
**dadurch gekennzeichnet, dass** der Kegel (23,230,2300) und der Kegelgrundboden (22,220,2200) sowohl Schneiden (270,2700) als auch Schneidstoff (55) zum spanenden Abtrag als auch Material (5) zum thermischen, nichtmechanischen Abtrag aufweist.

13. Elektrode (1,10,100) nach einem der vorhergehenden Ansprüche 10-12,
**dadurch gekennzeichnet, dass** der Hohlzylinder (2) einen Hohlzylinderaußendurchmesser (4) aufweist und der Hohlzylinderaußendurchmesser (4) ungefähr dem Kegelgrunddurchmesser (29,290,2900) entspricht.

14. Elektrode (1,10,100) nach einem der vorhergehenden Ansprüche 10-13,
**dadurch gekennzeichnet, dass** der Endzylinderaußendurchmesser (24,240, 2400) größer als der Hohlzylinderinnendurchmesser (3) ist, so dass der Endzylinder (21,210,2100) zumindest teilweise in den Hohlzylinder (2) mittels Presspassung einbringbar ist.

15. Elektrode (1,10,100) nach einem der vorhergehenden Ansprüche 10-13,
**dadurch gekennzeichnet, dass** der Hohlzylinderinnendurchmesser (3) größer als der Endzylinderaußendurchmesser (24,240,2400) ist, so dass der Endzylinder (21,210,2100) zumindest teilweise in den Hohlzylinder (2) mittels Spielpassung einbringbar ist.

16. Verfahren zum Herstellen eines Kopfes für eine Elektrode (1,10,100) nach den Ansprüchen 1-15, mit zumindest einen zum Werkstück weisenden Spitzenbereich
**gekennzeichnet durch**
folgende Schritte:
- Bereitstellen einer zumindest teilweisen hohlen Materialmatrix, insbesondere einer metallischen Matrix, wobei das Material (5) eine hohe elektrische Leitfähigkeit und einen hohen Schmelzpunkt aufweist;
- Füllen der Hohlräume mit zumindest teilweise pulvrigem Schneidstoff (55) zu einer Vollmatrix;
- Verfestigen des Schneidstoffs (55) mit der Matrix **durch** Wärmebehandlung zu dem Kopf, so dass ein abrasiver, spanender Abtrag als auch ein thermischer, nichtmechanischer Abtrag des Werkstücks gleichzeitig ermöglicht wird.

17. Verfahren zum Herstellen eines Kopfes für eine Elektrode (1,10,100) nach den Ansprüchen 1-15, mit zumindest einem zum Werkstück weisenden Spitzenbereich **gekennzeichnet durch** folgende Schritte:
- Bereitstellen eines Materials aus einem ersten Pulver, wobei das erste Pulver eine hohe elektrische Leitfähigkeit und einen hohen Schmelzpunkt aufweist,
- Bereitstellen eines Schneidstoffs (55) aus einem zweiten Pulver, wobei das zweite Pulver eine abrasive, spanende Wirkung aufweist,
- Vermischen des ersten Pulvers und des zweiten Pulvers zu einem Pulvergemisch,
- Verfestigen des Pulvergemisches, so dass ein abrasiver, spanender Abtrag als auch ein thermisch, nichtmechanischer Abtrag des Werkstücks gleichzeitig ermöglicht wird.

18. Verfahren zum Herstellen des Kopfes nach Anspruch 16 oder 17 für eine Elektrode (1,10,100) nach den Ansprüchen 1-15, umfassend den folgenden Schritt:
Anbringen von geometrisch bestimmten Schneiden und/oder geometrisch unbestimmten Schneiden zumindest in dem Spitzenbereich des Kopfes, so dass ein effizienter abrasiver, spanender Abtrag als auch ein thermisch, nichtmechanischer Abtrag des Werkstücks gleichzeitig ermöglicht wird.

19. Verfahren zum Herstellen einer Elektrode (1,10,100) zur Bearbeitung eines Werkstücks nach einem der vorhergehenden Ansprüche 1-15, umfassend einen Hohlzylinder (2) mit einem Hohlzylinderinnendurchmesser (3) und einen auf dem Hohlzylinder (2) angebrachten, zu dem Werkstück weisenden Kopf (20,200,2000), wobei der Kopf (20,200,2000) zumindest einen zum Werkstück weisenden Spitzenbereich und zumindest einen als Endbereich ausgestalteten, dem Spitzenbereich werkstückabgewandt nachfolgenden Endzylinder (21,210,2100) mit einem Endzylinderaußendurchmesser (24,240,2400) aufweist, mit den folgenden Schritten:
- Ausrichten des Endzylinders (21,210,2100) an den Hohlzylinder (2),
- Einbringen des Endzylinders (21,210,2100) an den Hohlzylinder (2) als eine Passung.

20. Verfahren nach Anspruch 19,
**dadurch gekennzeichnet, dass** der Endzylinderaußendurchmesser (24,240,2400) größer als der Hohlzylinderinnendurchmesser (3) ist, und die Passung als Presspassung ausgeführt wird.

21. Verfahren nach einem der Ansprüche 19-20, **dadurch gekennzeichnet, dass** nach dem spanenden Bearbeiten des Werkstücks der Kopf (20,200,2000) zur funkenerosiven Bearbeitung des Werkstücks verwendet wird, so lange bis der Kopf (20,200,2000) verschlissen ist und/oder mechanisch aus der Hohlzylinder (2) herausgezogen wird und/oder zumindest teilweise abgeschnitten wird, und anschließend bedarfsweise der Hohlzylinder (2) zur funkenerosiven Bearbeitung des Werkstücks verwendet wird.

22. Verfahren nach einem der vorhergehenden Ansprüche 19-21, **dadurch gekennzeichnet, dass** der Kopf (20,200,2000) mit einem Verfahren nach einem der Ansprüche 16-18 hergestellt wird.
